# EUROPÄISCHE PATENTSCHRIFT

(11) **EP 4 102 125 B1**
(45) Veröffentlichungstag und Bekanntmachung des Hinweises auf die Patenterteilung: **13.03.2024**
(21) Anmeldenummer: 22177771.7
(22) Anmeldetag: 08.06.2022
(51) Int. Cl.: F16L 41/08, F16L 55/163, F16L 55/179, F16L 55/18

(54) **BAUSATZ ZUR SANIERUNG EINES ROHRLEITUNGSANSCHLUSSES, MIT DRUCKSTANGE**
CONSTRUCTION KIT FOR RENEWING A PIPE CONDUIT CONNECTION, WITH PUSH ROD
MODULE D'ASSAINISSEMENT D'UN RACCORD DE TUYAUTERIE, POURVU DE TIGE DE COMPRESSION

(30) Priorität: 08.06.2021 DE 202021103082 U
(43) Veröffentlichungstag der Anmeldung: 14.12.2022
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Patentanwälte Olbricht Buchhold Keulertz

(56) Entgegenhaltungen:
- EP-B1- 2 955 426
- US-A1- 2013 187 376
- US-A1- 2020 328 003
- US-B2- 6 651 699

## Beschreibung

Die Erfindung betrifft einen Bausatz nach dem Oberbegriff des Anspruchs 1.

Aus der EP 2 955 426 B1, die als am nächsten kommender Stand der Technik angesehen wird, ist ein solcher Bausatz bekannt. Eine Rohrleitung weist eine Anschlussöffnung auf, an welche eine Nebenleitung angeschlossen werden soll. Der Sanierungsstutzen schafft eine solche Anschlussmöglichkeit. Nachdem die Abdichtscheibe des Bausatzes durch die Anschlussöffnung in das Innere der Rohrleitung eingebracht, dort auseinandergefaltet und anschließend dicht an die Innenseite der Wand der Rohrleitung angelegt worden ist, kann der Sanierungsstutzen montiert werden. Mittels eines Zugelements wird die Abdichtplatte an die Wand der Rohrleitung gezogen, so dass sie dieser inneren Wandoberfläche abdichtend anliegt. Der Sanierungsstutzen kann anschließend mittels eines formbaren und ggf. fließfähigen Dichtungsmittels auch dann zuverlässig dicht in der Anschlussöffnung abgedichtet werden, wenn die Anschlussöffnung unregelmäßig ausgestaltet ist und beispielsweise Auswaschungen, Ausbrüche, Risse oder ähnliche Unregelmäßigkeiten aufweist.

Um von außen die erforderliche Zugkraft auf die Abdichtplatte zu übertragen, ist außerhalb der Rohrleitung ein Widerlager vorgesehen. Dies kann beispielsweise in Form eines sogenannten Stützjochs ausgestaltet sein, welches mit zwei Stützen außen an die Rohrleitung angesetzt wird und von dem sich eine Zugstange, beispielsweise in Form einer Gewindestange, bis zur Abdichtplatte erstreckt.

Die Handhabung des Bausatzes ist grundsätzlich unproblematisch. Insbesondere jedoch, wenn eine Person nur selten Sanierungsarbeiten unter Verwendung eines derartigen Bausatzes durchführt, erfordert die Handhabung der miteinander verbundenen Bauteile von der Abdichtplatte über das Zugelement bis zum Stützjoch eine gewisse Aufmerksamkeit, da beispielsweise die außerhalb der Rohrleitung vorgesehenen Bestandteile des Bausatzes gehalten werden müssen, während gleichzeitig die Abdichtplatte in die Rohrleitung eingeführt und dort auseinandergefaltet werden muss. Anschließend müssen die außerhalb der Rohrleitung befindlichen Bestandteile so unter Zug gehalten werden, dass die innen an die Rohrleitung angelegte Abdichtplatte ihre eingenommene Stellung beibehält, bis die endgültige Zugkraft von außen aufgebracht worden ist und die Abdichtplatte auf diese Weise innen an der Rohrleitung festgelegt ist.

Der Erfindung liegt die Aufgabe zugrunde, einen gattungsgemä-ßen Bausatz dahingehend zu verbessern, dass dieser eine besonders einfache Handhabung ermöglicht.

Diese Aufgabe wird durch einen Bausatz mit den Merkmalen des Anspruchs 1 gelöst. Vorteilhafte Ausgestaltungen sind in den Unteransprüchen beschrieben.

Die Erfindung schlägt mit anderen Worten vor, dass die Abdichtplatte in der Rohrleitung gehalten werden kann, indem sie mittels einer Druckstange von innen an die Rohrwand gepresst wird. Hierzu erstreckt sich die Druckstange quer durch die Rohrleitung und stützt sich auf der Seite ab, die der Anschlussöffnung gegenüberliegt. Dabei ist vorschlagsgemäß vorgesehen, dass die Druckstange nicht präzise auf einen bestimmten Innendurchmesser der Rohrleitung abgestimmt sein muss, sondern dass sie vielmehr wahlweise quer zur Fläche der Abdichtplatte beweglich ist oder aber in Bezug auf die Abdichtplatte festgesetzt werden kann. Die Druckstange kann also zunächst durch die Anschlussöffnung quer in die Rohrleitung hineingeschoben werden, bis sie auf der gegenüberliegenden Seite der Rohrwandung anliegt. Anschließend kann sie an der Abdichtplatte festgelegt werden, so dass die Abdichtplatte in dieser Stellung fixiert ist. Nach dieser Abstützung der Abdichtplatte kann der Sanierungsstutzen, der z. B. eine Anschlussmuffe für ein seitlich von der Rohrleitung abgehendes Nebenrohr aufweisen kann, auf die Abdichtplatte gespannt werden. Dann kann ein erdfeuchter Mörtel oder ein vergleichbares Dichtungsmittel verwendet werden, um den Zwischenraum zwischen der Rohrleitung und dem Sanierungsstutzen zu verfüllen, so dass der Ringspalt, den die Anschlussöffnung der Rohrleitung rings um den Sanierungsstutzen bildet, abgedichtet ist. Die Bauteile des Bausatzes, die bei dem gattungsgemäßen Bausatz vorgesehen sind, um eine Zugkraft auf die Abdichtplatte aufzubringen, würden bei dieser Ausgestaltung des Bausatzes nicht benötigt.

Wenn jedoch in einer anderen Ausgestaltung wie bei dem gattungsgemäßen Bausatz vorgesehen ist, dass die Abdichtplatte während der gesamten Sanierung unter Zug an der Innenseite der Rohrleitung gehalten wird, bilden die beschriebenen Bestandteile des Bausatzes lediglich eine erste Baugruppe, und es ist darüber hinaus eine zweite Baugruppe erforderlich, die ein Zugelement aufweist, welches an die Abdichtplatte anschließt. Weiterhin weist die zweite Baugruppe ein Widerlager auf, das dazu dient, das Zugelement zu halten, so dass die entsprechende Zugkraft aufgebaut werden kann. Hierzu stützt sich das Widerlager außen an der Rohrleitung ab. Das Widerlager kann als Stützjoch ausgestaltet sein, wie dies von dem gattungsgemäßen Bausatz bekannt ist.

Nachfolgend wird, ohne den vorliegenden Vorschlag darauf einzuschränken, davon ausgegangen, dass der Bausatz die beiden Baugruppen umfasst und die Abdichtplatte unter Zug an die Innenseite der Rohrleitung gepresst wird, weil auf diese Weise besonders vorteilhaft sichergestellt werden kann, dass die Abdichtplatte ihre gewünschte Position beibehält und der Rohrleitung dicht anliegt, so dass ein dünnflüssiges Dichtungsmittel verwendet werden kann, welches optimal auch kleine Spalten ausfüllt und einen dichten Anschluss des Sanierungsstutzens besonders zuverlässig gewährleisten kann.

In diesem Fall der Zug-Halterung der Abdichtplatte dient die Druckstange dazu, die Abdichtplatte zunächst provisorisch in der Rohrleitung zu halten. Die Bauteile des Bausatzes, die sich außerhalb der Rohrleitung befinden und zu der erwähnten zweiten Baugruppe gehören, brauchen also zunächst nicht gehandhabt zu werden und beeinträchtigen die Arbeiten beim provisorischen Fixieren der Abdichtplatte nicht. Sie können nun, nachdem die Abdichtplatte provisorisch montiert ist, ihrerseits problemlos gehandhabt werden, ohne dabei die Bauteile der ersten Baugruppe insofern beachten zu müssen, als z. B. nicht darauf geachtet zu werden braucht, die Abdichtplatte stets unter Zug und in ihrer gewünschten Position zu halten. Wenn das Zugelement der zweiten, äußeren Baugruppe an die Abdichtplatte angeschlossen worden ist, die gewünschte Zugkraft auf die Abdichtplatte ausgeübt worden und die Abdichtplatte endgültig von innen an die Wand der Rohrleitung gepresst ist, kann die Druckstange wiederum in Bezug auf die Abdichtplatte verschoben werden, nämlich aus der Rohrleitung herausgezogen werden, so dass sich nun der gesamte Bausatz in denselben Zustand befindet, wie dies von dem bekannten Bausatz her ohne die Verwendung der Druckstange üblich und bekannt ist.

In einer vorteilhaften Ausgestaltung kann vorgesehen sein, dass der Bausatz in zwei Baugruppen aufgeteilt werden kann. Die eine Baugruppe umfasst die Bauteile, die im Inneren der Rohrleitung vorgesehen sind, beispielsweise die Druckstange und die Abdichtplatte sowie die damit notwendigerweise verbundenen kleineren Bauteile, z.B. Beschlagelemente. Die andere Baugruppe umfasst die Bauteile, die außerhalb der Rohrleitung vorgesehen sind, beispielsweise den Sanierungsstutzen, der sich weitestgehend außerhalb der Rohrleitung befindet, das Stützjoch, oder auch das Zugelement, welches sich zumindest mit seinem größten Anteil außerhalb der Rohrleitung befindet. Diese beiden Baugruppen des Bausatzes sind typischerweise durch das Zugelement miteinander verbunden. In der erwähnten vorteilhaften Ausgestaltung kann das Zugelement in zwei getrennte Abschnitte unterteilt sein, die lösbar miteinander verbunden sind. Der eine Abschnitt ist der ersten Baugruppe zugeordnet und kann gemeinsam mit der Abdichtplatte gehandhabt werden. Er wird als Kopplungsabschnitt bezeichnet und dient dazu, den Anschluss des zweiten Abschnitts des Zugelements zu ermöglichen und zwar einen zugfesten Anschluss, so dass die gewünschten Zugkräfte mittels der beiden miteinander verbundenen Abschnitte übertragen werden können. Der zweite Abschnitt des Zugelements ist der zweiten Baugruppe zugeordnet, welche die Bauteile außerhalb der Rohrleitung umfasst, und ist mit dem Widerlager verbunden, beispielsweise dem erwähnten Stützjoch.

Eine schnell und problemlos handhabbare Ausgestaltung der beiden Abschnitte des Zugelements kann dadurch erreicht werden, dass einer der beiden Abschnitte als Haken und der andere der beiden Abschnitte als Öse ausgestaltet ist. Im Unterschied zu beispielsweise einer Verschraubung können die beiden Abschnitte in diesem Fall werkzeuglos miteinander verbunden oder voneinander gelöst werden. Und im Unterschied dazu, beide Abschnitte mit einer offenen Geometrie auszugestalten, beispielsweise jeweils als Haken, stellt die Ausgestaltung eines Abschnitts mit einer geschlossenen Geometrie, als geschlossene Öse sicher, dass die beiden Abschnitte möglichst gut dagegen gesichert sind, während der Handhabung des Zugelements unbeabsichtigt voneinander getrennt zu werden. Beispielsweise kann die Öse als Ring oder als U-förmiger, an beiden Enden an ein anderes Bauteil angeschlossener Bügel, oder dergleichen ausgestaltet sein.

In einer Ausgestaltung kann die Druckstange in Form einer Gewindestange bereitgestellt werden. Es handelt sich dabei um ein wirtschaftlich erhältliches Halbzeug, für welches praktisch an jeder Baustelle bei einer versehentlichen Beschädigung problemlos im nächsten Baumarkt Ersatz beschafft werden kann. Zudem ermöglicht die Gewindestange durch ihre Profilierung eine entsprechend der Gewindesteigung sehr feinstufige Festlegung, wenn die Gewindestange beispielsweise mittels einer Sperrklausel oder dergleichen in ihrer jeweiligen Stellung an der Abdichtplatte fixiert werden soll. Wenn die Gewindestange jedoch mit einer Mutter zusammenwirkt, kann sie sogar eine stufenlose Einstellung ermöglichen.

Wenn eine Gewindestange als Druckstange genutzt wird, kann eine besonders schnelle und unkomplizierte Handhabung des Bausatzes dadurch erreicht werden, dass die Abdichtplatte mit einer Schnellspannmutter versehen ist. Eine solche Schnellspannmutter weist entweder zueinander bewegliche Elemente auf, oder sie ist in Bezug auf die Gewindestange beweglich, z.B. kippbeweglich. Die Schnellspannmutter ermöglicht einerseits, die Gewindestange in axialer Richtung durch die Schnellspannmutter hindurch zu schieben, wobei sich Gewindeabschnitte der Schnellspannmutter außer Eingriff mit dem Gewinde der Gewindestange befinden. Andererseits ermöglicht die Schnellspannmutter in einer Eingriff-Stellung, in das Gewinde der Gewindestange einzugreifen und auf diese Weise die Gewindestange in ihrer jeweiligen axialen Stellung gegen axiale Verschiebungen zu sichern. Zudem kann in dieser Eingriff-Stellung durch eine Drehbewegung entweder der Gewindestange oder der Schnellspannmutter eine stufenlose axiale Bewegung der Gewindestange erreicht werden. Die Gewindestange kann also zunächst durch die Schnellspannmutter geschoben werden, bis sie auf der gegenüberliegenden Seite der Wand der Rohrleitung anliegt. Anschließend wird die Schnellspannmutter in ihre Eingriff-Stellung gebracht, und durch die erwähnte Drehbewegung kann nun die Gewindestange weiter geschraubt werden oder die Abdichtplatte auf der Gewindestange verlagert werden. Jedenfalls kann im Ergebnis ein höherer Anpressdruck der Abdichtplatte erreicht werden und auf diese Weise sichergestellt werden, dass die Abdichtplatte ihre provisorisch eingenommene Stellung zuverlässig beibehält, bis sie mittels des Zugelements und der zweiten, außen an der Rohrleitung vorgesehenen Baugruppe endgültig für die Montage des Sanierung Stutzens fixiert wird.

Die Druckstange kann in einer Ausgestaltung eine kugelförmige Handhabe aufweisen. Ohne einen speziellen Handgriff bereitstellen zu müssen, kann eine Kugel als wirtschaftlich erhältliches Halbzeug einer Druckstange montiert sein, um eine gleichmäßige Druckverteilung an der Hand des Benutzers zu erreichen, wenn die Druckstange unter einem bestimmten Druck gegen die gegenüberliegende Wandfläche der Rohrleitung gepresst wird, ohne unerwünschte oder schmerzhafte Druckstellen zu bewirken. Wenn die Druckstange als Gewindestange ausgestaltet ist, kann die Kugel zudem anschließend auch als Handgriff genutzt werden, um eine Drehbewegung der Gewindestange auszuführen.

Ein Ausführungsbeispiel der Erfindung wird anhand der rein schematischen Darstellungen nachfolgend näher erläutert. Dabei zeigt
- Fig. 1 bis 3: Handhabungsschritte beim Einsetzen einer Abdichtplatte in eine Rohrleitung,
- Fig. 4: einen Längsschnitt durch eine Schnellspannmutter,
- Fig. 5 und 6: weitere Handhabungsschritte beim Einsetzen der Abdichtplatte, und die
- Fig. 7 bis 9: außerhalb der Rohrleitung vorgesehene Bauteile eines Sanierung-Bausatzes und deren Handhabung.

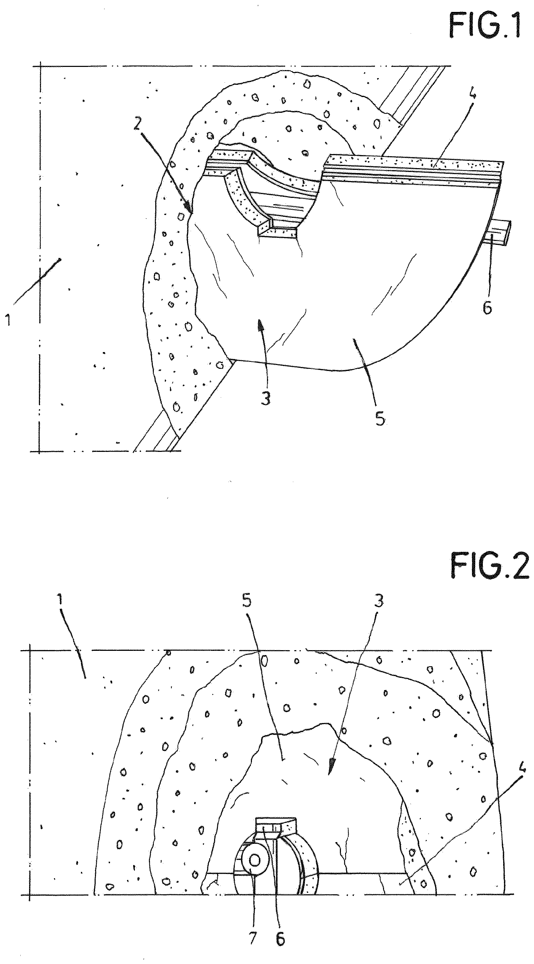

Fig. 1 zeigt eine Rohrleitung 1 mit einer unregelmäßig geformten Anschlussöffnung 2. Eine faltbare Abdichtplatte 3 weist einen Rücken 4 und 2 annähernd halbkreisförmige Kreissegmente 5 auf, die jeweils gelenkig gegenüber dem Rücken 4 beweglich sind und parallel zueinander in eine Faltstellung geschwenkt worden sind, in welcher sie um 90° gegenüber dem Rücken 4 abgewinkelt sind. Zwischen den beiden Kreissegmenten 5 befindet sich unterhalb des Rückens 4 eine Traverse 6, die als Flacheisen aus Stahl ausgestaltet ist. In der dargestellten Faltstellung kann die Abdichtplatte 3 durch die Anschlussöffnung 2 in das Innere der Rohrleitung 1 eingebracht werden.

In Fig. 2 ist dargestellt, dass im weiteren Arbeitsfortschritt die Abdichtplatte 3 im Inneren der Rohrleitung 1 auseinandergefaltet worden ist. Die Traverse 6 ist quer zum Verlauf des Rückens 4 ausgerichtet worden, also auch quer zu den beiden Faltlinien, die zwischen dem Rücken 4 und den Kreissegmenten 5 verlaufen. Eine Schnellspannmutter 7, die sich auf der Traverse 6 befindet, ist ebenfalls in Fig. 2 ersichtlich.

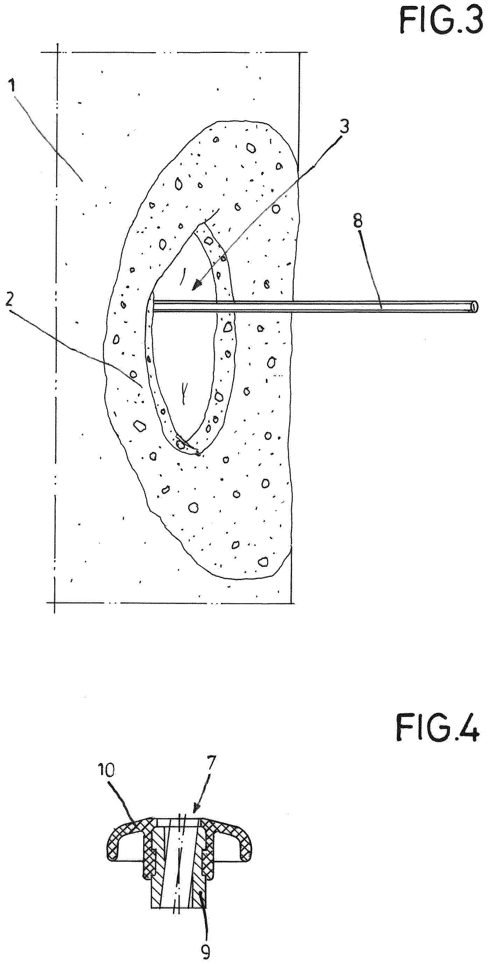

Fig. 3 zeigt, dass im weiteren Verlauf der Arbeiten eine Druckstange 8 an die Abdichtplatte 3 angesetzt worden ist. Die Druckstange 8 ist als Gewindestange ausgestaltet und in die in Fig. 3 nicht ersichtliche Schnellspannmutter 7 eingeführt worden.

Fig. 4 zeigt einen Längsschnitt in axialer Richtung durch eine Schnellspannmutter 7. Diese besteht einerseits aus einer metallischen Hülse 9 und andererseits aus einem Kunststoff-Griffteil 10. Die Schnellspannmutter 7 wird von zwei Durchgangsbohrungen durchsetzt: eine erste Durchgangsbohrung verläuft axial und weist ein Innengewinde auf. Eine zweite Durchgangsbohrung verläuft in einem schrägen Winkel dazu und ist gewindelos ausgestaltet. Wird die Druckstange 8 durch die schräge Durchgangsbohrung geführt, so kann die Druckstange 8 längs verschoben werden, ohne mit dem Gewinde der Schnellspannmutter 7 zu kämmen. Wird anschließend die Schnellspannmutter 7 gekippt, so dass die Druckstange 8 in der axialen Durchgangsbohrung aufgenommen ist, so kämmen die Gewindeanteile der Schnellspannmutter 7 mit dem Gewinde der Druckstange 8, die als Gewindestange ausgestaltet ist.

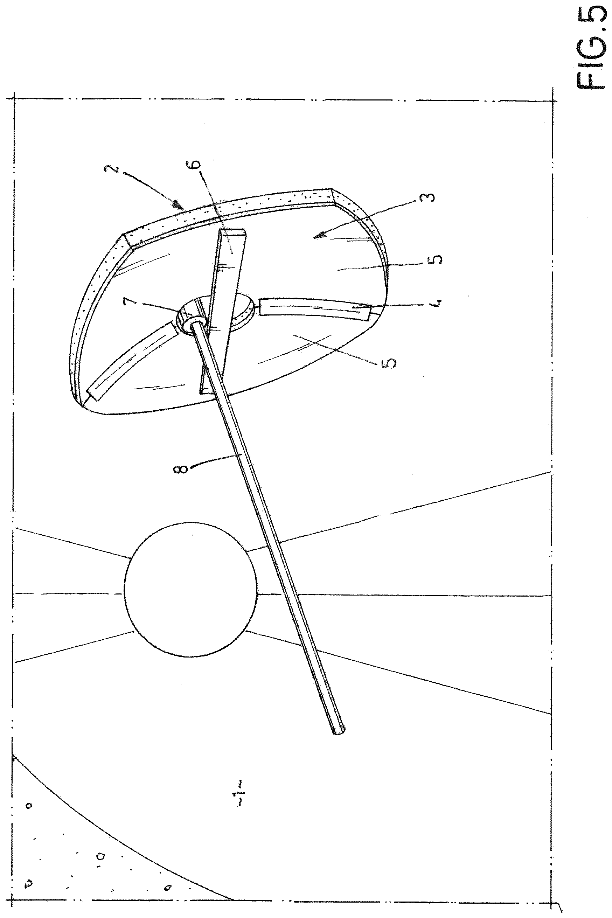

Fig. 5 zeigt den weiteren Arbeitsfortschritt, nämlich dass die Druckstange 8 so weit durch die Schnellspannmutter 7 geschoben worden ist, bis sie auf der der Anschlussöffnung 2 gegenüberliegenden Seite innen an der Wand der Rohrleitung 1 anliegt.

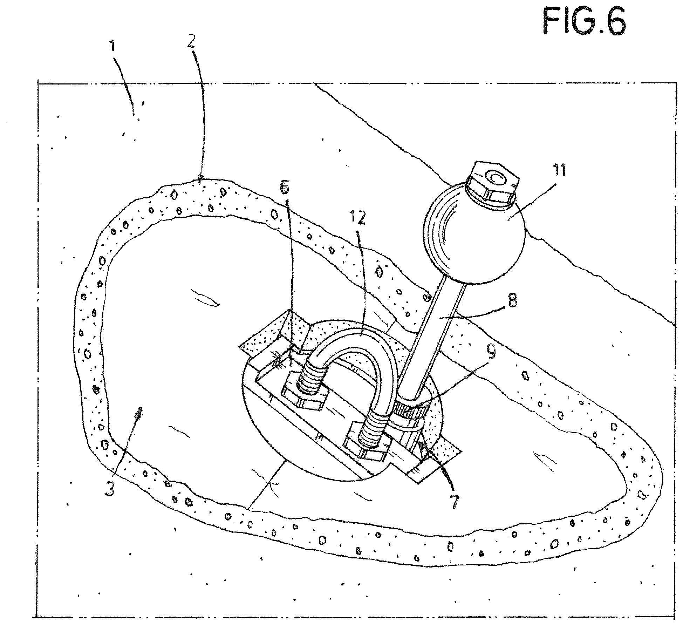

Fig. 6 zeigt die Situation der Fig. 5 in einem Blickwinkel von der Außenseite der Rohrleitung 1 her. Dabei ist ersichtlich, dass am Ende der Druckstange 8 eine kugelförmige Handhabe 11 angeordnet ist. Weiterhin ist erkennbar, dass im Sinne einer Platz sparenden Bauweise die Schnellspannmutter 7 ohne ein Griffteil 10 ausgestattet ist und lediglich aus der metallischen Hülse 9 besteht. Schließlich zeigt Fig. 6 auch, dass auf der Traverse 6 eine Öse 12 angeordnet ist. Diese ist in Form eines U-förmigen Bügels ausgestaltet, der mit seinen beiden Enden an die Traverse 6 anschließt, so dass eine ringsum geschlossene Öse 12 geschaffen wird. Die Öse 12 stellt einen Abschnitt eines Zugelements dar, wie später noch näher erläutert wird, nämlich den Abschnitt der an der Baugruppe des Bausatzes vorgesehen ist, welche sich im Wesentlichen innerhalb der Rohrleitung 1 befindet.

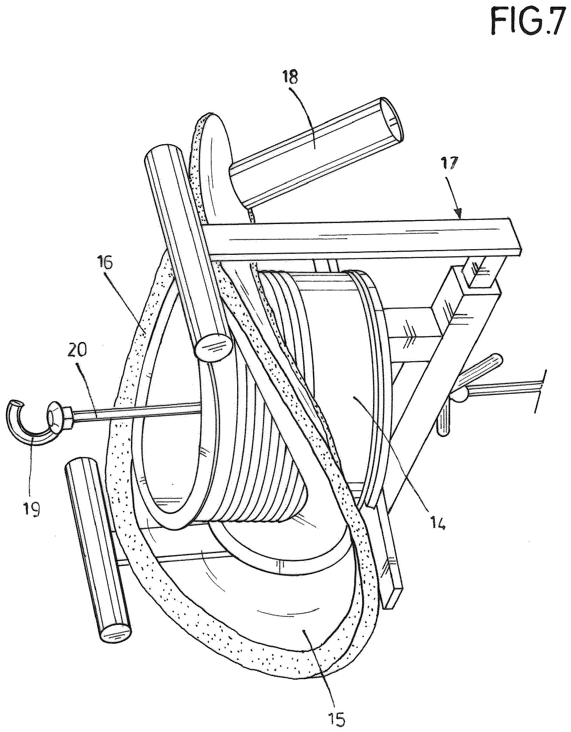

Fig. 7 zeigt die zweite Baugruppe des Bausatzes, welche diejenigen Elemente Bausatzes umfasst, die sich im Wesentlichen außerhalb der Rohrleitung 1 befinden. Die Baugruppe umfasst dabei unter anderem einen Sanierungsstutzen 14, einen transparenten Kragen 15 mit einer umlaufenden, zur Rohrleitung 1 hin ausgerichteten Dichtung 16 und ein verstellbares Stützjoch 17. Über ein Füllrohr 18 kann ein fließfähiges Dichtungsmaterial unter den Kragen 15 gebracht werden, welches sich bis zur Abdichtplatte 3 und zur Dichtung 16 sowie in der Anschlussöffnung 2 verteilt und den Sanierungsstutzen 14 abdichtend umgibt.

Fig. 7 zeigt weiterhin einen zweiten Abschnitt des erwähnten Zugelements, wobei dieser zweite Abschnitt einen Haken 19 und eine Gewindestange 20 enthält.

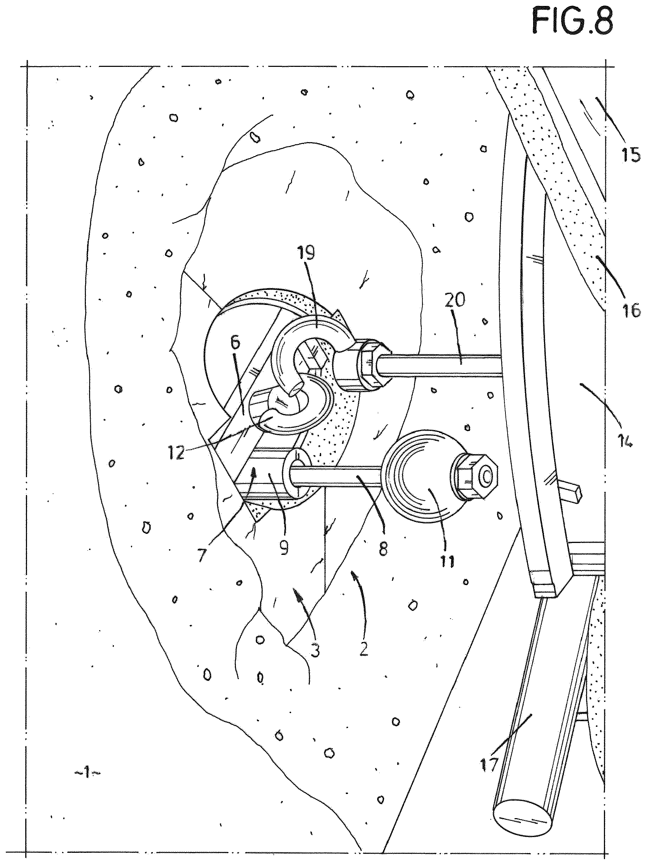

Fig. 8 zeigt, wie im weiteren Verlauf des Arbeitsfortschritts der Haken 19 in die Öse 12 des ersten Abschnitts eingehakt werden kann, um so ein durchgängiges Zugelement zu schaffen, welches sich von dem Stützjoch 17 bis zur Abdichtplatte 3 erstreckt, insbesondere bis zu deren Traverse 6. Dabei ist in Fig. 8 ein Ausführungsbeispiel einer Öse 12 dargestellt, die nicht als U-förmiger Bügel, sondern als geschlossener Ring ausgestaltet ist.

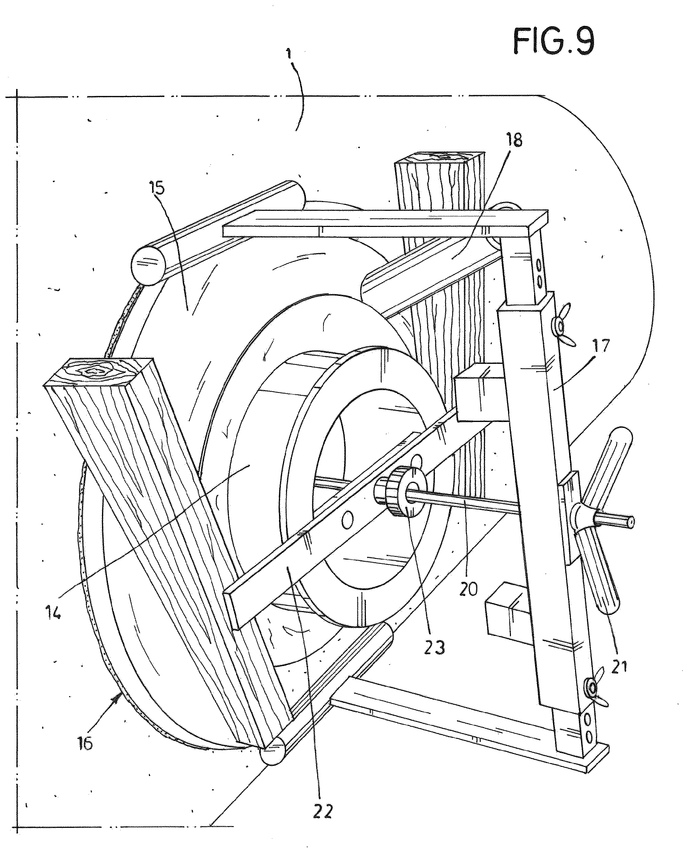

Fig. 9 zeigt, wie der gesamte Bausatz, bestehend aus der inneren und der äußeren Baugruppe, an der Rohrleitung 1 montiert ist, so dass nun über das Füllrohr 18 das Dichtungsmittel in den Hohlraum eingefüllt werden kann, der durch die Abdichtplatte 3, den Sanierungsstutzen 14, den Kragen 15 und die Dichtung 16 begrenzt ist. Die Gewindestange 20 als Teil des Zugelements kann mittels einer Flügelmutter 21 gespannt werden, so dass die Abdichtplatte 3 von innen an die Wand der Rohrleitung 1 gepresst wird. Wenn die Abdichtplatte 3 auf diese Weise in ihrer gewünschten Stellung endgültig fixiert ist, kann die Druckstange 8 entfernt werden.

Der Sanierungsstutzen 14 liegt mit einem Ende der Abdichtplatte 3 an. Um einen unerwünschten Austritt des Dichtungsmittels in diesem Bereich zu vermeiden, kann der Sanierungsstutzen 14 an die Abdichtplatte 3 angepresst werden. Hierzu ist eine Stutzentraverse 22 vorgesehen, durch welche sich die Gewindestange 20 erstreckt. Mittels einer von Hand betätigbaren Rändelmutter 23 kann der Anpressdruck eingestellt werden. Weiterhin ist vorgesehen, dass mittels der Stutzentraverse 22 auch die Dichtung 16 des Kragens 15 unter Druck gesetzt werden kann, nämlich über Zwischenstücke, die bei dem dargestellten Ausführungsbeispiel als Holzbohlen dargestellt sind, wie sie an jeder Baustelle problemlos verfügbar sind. Statt der Holzbohlen kann jedoch auch eine einstellbare Andruck-Konstruktion Verwendung finden, beispielsweise mittels Gewindespindeln oder Excentern, die an den beiden Enden der Stutzentraverse 22 angeordnet sein können, um in Anpassung an die konstruktiven Gegebenheiten der jeweiligen Baustelle den gewünschten Druck auf die Dichtung 16 ausüben zu können. Auch das Stützjoch 17 übt mit zwei Fußleisten einen entsprechenden Anpressdruck auf die Dichtung 16 aus. In Anpassung an den jeweils verwendeten Kragen 15 und somit in Anpassung an den jeweiligen Durchmesser der Dichtung 16 ist das Stützjoch 17 verstellbar, so dass der Abstand der beiden Fußleisten zueinander eingestellt werden kann.

### Bezugszeichen:

- 1: Rohrleitung
- 2: Anschlussöffnung
- 3: Abdichtplatte
- 4: Rücken
- 5: Kreissegment
- 6: Traverse
- 7: Schnellspannmutter
- 8: Druckstange
- 9: Hülse
- 10: Griffteil
- 11: Handhabe
- 12: Öse
- 14: Sanierungsstutzen
- 15: Kragen
- 16: Dichtung
- 17: Stützjoch
- 18: Füllrohr
- 19: Haken
- 20: Gewindestange
- 21: Flügelmutter
- 22: Stutzentraverse
- 23: Rändelmutter

## Patentansprüche

1. Bausatz zur Sanierung eines Rohrleitungsanschlusses,
• mit einer an die Innenseite der Wand der Rohrleitung (1) anlegbaren, gelenkig faltbaren Abdichtplatte (3),
• und mit einem Sanierungsstutzen (17), der dazu bestimmt ist, sich von der Abdichtplatte (3) durch eine in der Wand vorhandene Anschlussöffnung (2) über die Wand der Rohrleitung (1) hinaus zu ragen und den Anschluss eines Nebenrohrs zu ermöglichen,
**gekennzeichnet durch**
eine Druckstange (8), die durch die Abdichtplatte (3) verläuft und dazu bestimmt ist, gegenüberliegend an die Innenseite der Wand der Rohrleitung (1) angelegt zu werden und derartig eine die Abdichtplatte (3) an die Innenseite der Wand der Rohrleitung (1) anpressende Druckkraft zu übertragen,
wobei die Druckstange (8) wahlweise quer zur Fläche der Abdichtplatte (3) beweglich oder relativ zur Abdichtplatte (3) festlegbar ist.

2. Bausatz nach Anspruch 1,
**gekennzeichnet durch**
ein Zugelement, welches dazu bestimmt ist, eine die Abdichtplatte (3) an die Innenseite der Wand der Rohrleitung (1) anpressende Zugkraft zu übertragen,
und ein Widerlager, welches dazu bestimmt ist, an die Außenseite der Wand der Rohrleitung (1) angesetzt zu werden und die Zugkraft in der Art aufzunehmen, dass das Zugelement an dem Widerlager gehalten ist.

3. Bausatz nach Anspruch 2,
**dadurch gekennzeichnet,**
**dass** das Zugelement zwei Abschnitte aufweist, die lösbar miteinander verbunden sind, wobei ein erster Abschnitt gemeinsam mit der Abdichtplatte (3) handhabbar ist und als Kopplungsabschnitt dazu bestimmt ist, den zugfesten Anschluss eines zweiten Abschnitts zu ermöglichen, der mit einem außen an die Rohrleitung (1) anlegbaren Widerlager verbunden ist.

4. Bausatz nach Anspruch 3,
**dadurch gekennzeichnet,**
**dass** einer der beiden Abschnitte des Zugelements (17) als Haken (19) und der andere Abschnitt als Öse (12) ausgestaltet ist.

5. Bausatz nach einem der vorhergehenden Ansprüche,
**dadurch gekennzeichnet,**
**dass** die Druckstange (8) als Gewindestange ausgestaltet ist.

6. Bausatz nach Anspruch 5,
**dadurch gekennzeichnet,**
**dass** die Abdichtplatte (3) mit einer Schnellspannmutter (7) versehen ist, die dazu bestimmt ist, die Druckstange (8) wahlweise durchrutschen zu lassen oder mittels des Gewindes verschiebesicher zu erfassen.

7. Bausatz nach einem der vorhergehenden Ansprüche,
**dadurch gekennzeichnet,**
**dass** die Druckstange (8) eine kugelförmige Handhabe (11) aufweist.

## Claims

1. Kit for reconstructing a pipe connection,
• with an articulated foldable sealing plate (3) that can be placed against the inside of the wall of the pipeline (1),
• and with a renovation socket (17) intended to protrude from the sealing plate (3) through a connection opening (2) in the wall beyond the wall of the pipeline (1) and to enable the connection of a secondary pipe,
**characterised by** a push bar (8) passing through the sealing plate (3) and that is intended to be placed opposite to the inside of the wall of the pipeline (1) and in this way to abut the sealing plate (3) to the inside of the wall of the pipeline (1 ) to transmit compressive force,
where the push bar (8) is optionally movable transversely to the surface of the sealing plate (3) or can be fixed relative to the sealing plate (3).

2. Kit according to claim 1, **characterised by**
a tension element that is intended to transmit a tensile force pressing the sealing plate (3) to the inside of the wall of the pipeline (1),
and an abutment that is intended to be placed to the outside of the wall of the pipeline (1) and to receive the tensile force in such a way that the tension element is held on the abutment.

3. Kit according to claim 2, **characterised**
**in that** the tension element has two sections which are detachably connected to one another, where a first section can be handled together with the sealing plate (3) and is intended as a coupling section to enable the tension-proof connection of a second section, which is connected to an abutment that can be placed against the outside of the pipeline (1).

4. Kit according to claim 3, **characterised**
**in that** one of the two sections of the tension element (17) is designed as a hook (19) and the other section as an eyelet (12).

5. Kit according to any one of the preceding claims, **characterised**
**in that** the push bar (8) is designed as a threaded rod.

6. Kit according to claim 5, **characterised**
**in that** the sealing plate (3) is provided with a quick-locking nut (7), which is designed to, optionally, allow the push bar (8) to slip through or to be held in place by means of the thread.

7. Kit according to any one of the preceding claims, **characterised**
**in that** the push bar (8) has a spherical handle (11).

## Revendications

1. Kit d'assainissement d'un raccord de conduite,
• comprenant une plaque d'étanchéité (3) articulée pliable, applicable contre la paroi intérieure de la conduite (1),
• et comprenant un embout d'assainissement (17) destiné à dépasser de la plaque d'étanchéité (3) à travers un orifice de raccordement (2) présent dans le mur pour faire saillie au-delà de la paroi de la conduite (1), et à permettre le raccordement d'un tuyau auxiliaire,
**caractérisé par** une tige de compression (8) qui traverse la plaque d'étanchéité (3) et qui est destinée à être appliquée en face contre le côté intérieur de la paroi de la conduite (1) et à communiquer de la sorte une force de compression pressant la plaque d'étanchéité (3) contre la paroi intérieure de la conduite (1),
sachant que la tige de compression (8) est, au choix, déplaçable transversalement à la surface de la plaque d'étanchéité (3), ou immobilisable relativement à la plaque d'étanchéité (3).

2. Kit selon la revendication 1, **caractérisé par**
un élément de traction destiné à transmettre une force de traction pressant la plaque d'étanchéité (3) contre la paroi intérieure de la conduite (1),
et par un palier antagoniste destiné à être appliqué contre la paroi extérieure de la conduite (1) et à absorber la force de traction de sorte que l'élément de traction soit maintenu contre le palier antagoniste.

3. Kit selon la revendication 2, **caractérisé en ce**
**que** l'élément de traction présente deux segments reliés entre eux de façon détachable, sachant que le premier segment est manipulable conjointement à la plaque d'étanchéité (3) et qu'il est destiné, en tant que segment de couplage, à permettre le raccordement - résistant en traction - d'un deuxième segment qui est relié avec le palier antagoniste applicable à l'extérieur contre la conduite (1).

4. Kit selon la revendication 3, **caractérisé en ce**
**que** l'un des deux segments de l'élément de traction (17) est configuré comme crochet (19) et que l'autre segment est configuré comme oeillet (12).

5. Kit selon l'une des revendications précédentes, **caractérisé en ce**
**que** la barre de traction (8) est configurée comme barre filetée.

6. Kit selon la revendication 5, **caractérisé en ce**
**que** la plaque d'étanchéité (3) est munie d'un écrou de serrage rapide (7) destiné au choix à laisser glisser la tige de compression (8) ou à la saisir au moyen d'un filage de façon à l'empêcher de se déplacer.

7. Kit selon l'une des revendications précédentes, **caractérisé en ce**
**que** la barre de compression (8) présente un pommeau de préhension (11) sphérique.
